# EUROPEAN PATENT APPLICATION

(11) **EP 4 554 278 A2**
(43) Date of publication of application: **14.05.2025**
(21) Application number: 25166723.4
(22) Date of filing: 20.01.2023
(51) Int. Cl.: H04W 24/10

(54) **POWER SAVING IN CELLULAR COMMUNICATION NETWORKS**

(30) Priority: 24.01.2022 FI 20225054
(62) Divisional of application: 23701687.8
(71) Applicant: Nokia Technologies Oy, 02610 Espoo (FI)
(72) Inventor: KOSKINEN, Jussi-Pekka, 90420 Oulu (FI); TURTINEN, Samuli Heikki, 91100 Ii (FI)
(74) Representative: Samson & Partner Patentanwälte mbB

(57) **Abstract**

According to an example aspect of the present disclosure, there is provided an apparatus comprising means for determining that a change of a measurement relaxation status of the apparatus to another measurement relaxation status is triggered, means for determining whether to change the measurement relaxation status to said another measurement relaxation status before a measurement relaxation related event takes place and means for transmitting the report about said another measurement relaxation status to a wireless network node.

## Description

### FIELD

Various example embodiments relate in general to cellular communication networks and more specifically, to saving power in such networks.

### BACKGROUND

User Equipments, UEs, typically have limited power. Hence, saving power of UEs is important in various cellular networks, such as, in networks operating according to Long Term Evolution, LTE, and/or 5G radio access technology. 5G radio access technology may also be referred to as New Radio, NR, access technology. Since its inception, LTE has been widely deployed and 3rd Generation Partnership Project, 3GPP, still develops LTE. Similarly, 3GPP also develops standards for 5G/NR. One of the topics in the 3GPP discussions is power consumption of UEs and there is a need to provide enhanced methods, apparatuses and computer programs for saving power of UEs in cellular communication networks. Such enhancements may also be beneficial in other cellular communication networks as well, such as in 6G networks in the future.

### SUMMARY

According to some aspects, there is provided the subject-matter of the independent claims. Some example embodiments are defined in the dependent claims.

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

According to a first aspect of the present disclosure, there is provided an apparatus comprising means for determining that a change of a measurement relaxation status of the apparatus to another measurement relaxation status is triggered, means for determining whether to change the measurement relaxation status to said another measurement relaxation status before a measurement relaxation related event takes place and means for transmitting the report about said another measurement relaxation status to a wireless network node. The apparatus of the first aspect may be a user equipment or a control device configured to control the functioning thereof, possibly when installed therein.

Example embodiments of the first aspect may comprise at least one feature from the following bulleted list or any combination of the following features:
- wherein the measurement relaxation related event is a transmission of the report about said another measurement relaxation status to the wireless network node or expiry of a User Equipment, UE, assistance information prohibit timer of the apparatus;
- wherein the apparatus is in a measurement relaxation mode before the change and in a non-measurement relaxation mode after the change, or the apparatus is in the non-measurement relaxation mode before the change and in the measurement relaxation mode after the change, and the apparatus is allowed to relax measurements in the measurement relaxation mode and the apparatus is not allowed to relax measurements in the non-measurement relaxation mode;
- wherein the measurement relaxation status is that measurements are relaxed and said another measurement relaxation status is that measurements are not relaxed, or the measurement relaxation status is that measurements are not relaxed and said another measurement relaxation status is that measurements are relaxed;
- the apparatus further comprises means for determining whether the apparatus is allowed to change the measurement relaxation status of the apparatus based on a status of a UE assistance information prohibit timer and said another measurement relaxation status;
- wherein the status of the UE assistance information prohibit timer is running or not started;
- wherein said another relaxation status depends on whether a measurement relaxation condition is met or not met;
- the apparatus further comprises means for determining whether to change the measurement relaxation status of the apparatus while a UE assistance information prohibit timer is running;
- the apparatus further comprises means for determining to change the measurement relaxation status of the apparatus while a UE assistance information prohibit timer is running and means for changing the measurement relaxation status to said another measurement relaxation status before the measurement relaxation related event takes place;
- the apparatus further comprises means for determining to change the measurement relaxation status of the apparatus before the measurement relaxation related event takes place when a measurement relaxation condition is not met while a UE assistance information prohibit timer is running and means for changing the measurement relaxation status to said another measurement relaxation status before the measurement relaxation related event takes place;
- the apparatus further comprises means for determining to change the measurement relaxation status of the apparatus after the measurement relaxation related event has taken place when a measurement relaxation condition is met while a UE assistance information prohibit timer is running and means for changing the measurement relaxation status to said another measurement relaxation status after the measurement relaxation related event has taken place;
- the apparatus further comprises means for determining to change the measurement relaxation status of the apparatus before the measurement relaxation related event takes place when a UE assistance information prohibit timer was not started when a measurement relaxation condition was met and reported;
- the apparatus further comprises means for reporting that the measurement relaxation status of the apparatus was changed to said another measurement relaxation status before transmitting the report about said another measurement relaxation status to the wireless network node;
- the apparatus further comprises means for reporting how long ago before transmitting the report about said another measurement relaxation status of the apparatus to the wireless network node the measurement relaxation status of the apparatus was changed;
- the apparatus further comprises means for receiving a configuration, the configuration indicating whether the apparatus is allowed to change the measurement relaxation status of the apparatus before transmitting the report about said another measurement relaxation status of the apparatus to the wireless network node;
- the apparatus further comprises means for receiving a configuration, the configuration indicating whether the apparatus is allowed to change the measurement relaxation status of the apparatus while a UE assistance information prohibit timer is running;
- wherein the measurement relaxation status and said another measurement relaxation status comprise at least one of Radio Resource Management, RRM, Radio Link Monitoring, RLM, and Beam Failure Detection, BFD, measurement relaxation statuses.
- the apparatus further comprises means for determining to change the measurement relaxation status of the apparatus in case the condition for RRM or RLM or BFD measurement relaxation condition is met during a certain amount of time (needs to be fulfilled, i.e., met, all the time during this time);
- wherein the transmitting the report about measurement relaxation status to the wireless network node is performed in case the condition for RRM or RLM or BFD measurement relaxation condition is met during a certain amount of time;
- the apparatus further comprises means for determining to change the measurement relaxation status of the apparatus and transmitting the report about measurement relaxation status in case relaxation status of the apparatus is different than the previously sent measurement relaxation status;
- wherein a first relaxation status report transmitted by the apparatus indicates that RRM or RLM or BFD measurement relaxation condition is met;
- the first measurement relaxation status report is triggered when measurement relaxation condition is first met since configured.

According to a second aspect of the present disclosure, there is provided an apparatus comprising means for receiving from a user equipment a report indicating a change of a measurement relaxation status of the user equipment to another measurement relaxation status. The apparatus of the first aspect may be a wireless network node or a control device configured to control the functioning thereof, possibly when installed therein.

Example embodiments of the first aspect may comprise at least one feature from the following bulleted list or any combination of the following features:
- receiving from the user equipment a report indicating that the measurement relaxation status of the user equipment was changed to said another measurement relaxation status before transmission of the report about said another measurement relaxation status;
- the apparatus further comprises means for receiving from the user equipment a report indicating how long ago before transmission of the report about said another measurement relaxation status of the user equipment the measurement relaxation status of the user equipment was changed;
- the apparatus further comprises means for transmitting a configuration, the configuration indicating whether the user equipment is allowed to change the measurement relaxation status of the user equipment before transmission of the report about said another measurement relaxation status;
- the apparatus further comprises means for transmitting a configuration, the configuration indicating whether the user equipment is allowed to change the measurement relaxation status of the user equipment while a UE assistance information prohibit timer is running.

According to a third aspect, there is provided a first method comprising, determining that a change of a measurement relaxation status of the apparatus to another measurement relaxation status is triggered, determining whether to change the measurement relaxation status to said another measurement relaxation status before a measurement relaxation related event takes place and transmitting the report about said another measurement relaxation status to a wireless network node. The first method may be performed by a user equipment or a control device configured to control the functioning thereof, possibly when installed therein.

According to a fourth aspect, there is provided a second method comprising, receiving from a user equipment a report indicating a change of a measurement relaxation status of the user equipment to another measurement relaxation status. The second method may be performed by a wireless network node or a control device configured to control the functioning thereof, possibly when installed therein.

According to a fifth aspect of the present disclosure, there is provided an apparatus comprising at least one processing core, at least one memory including computer program code, the at least one memory and the computer program code being configured to, with the at least one processing core, cause the apparatus at least to determine that a change of a measurement relaxation status of the apparatus to another measurement relaxation status is triggered, determine whether to change the measurement relaxation status to said another measurement relaxation status before a measurement relaxation related event takes place and transmit the report about said another measurement relaxation status to a wireless network node. The apparatus of the fifth aspect may be a user equipment or a control device configured to control the functioning thereof, possibly when installed therein.

According to a sixth aspect of the present disclosure, there is provided an apparatus comprising at least one processing core, at least one memory including computer program code, the at least one memory and the computer program code being configured to, with the at least one processing core, cause the apparatus at least to receive from a user equipment a report indicating a change of a measurement relaxation status of the user equipment to another measurement relaxation status. The apparatus of the sixth aspect may be a wireless network node or a control device configured to control the functioning thereof, possibly when installed therein.

According to a seventh aspect of the present disclosure, there is provided a non-transitory computer readable medium having stored thereon a set of computer readable instructions that, when executed by at least one processor, cause an apparatus to at least to perform the first method. According to an eighth aspect of the present disclosure, there is provided a non-transitory computer readable medium having stored thereon a set of computer readable instructions that, when executed by at least one processor, cause an apparatus to at least to perform the second method.

According to a ninth aspect of the present disclosure, there is provided a computer program comprising instructions which, when the program is executed by an apparatus, cause the apparatus to carry out the first method. According to a tenth aspect of the present disclosure, there is provided a computer program comprising instructions which, when the program is executed by an apparatus, cause the apparatus to carry out the second method.

### BRIEF DESCRIPTION OF THE DRAWINGS

FIGURE 1 illustrates an example of a network scenario in accordance with at least some example embodiments;
FIGURE 2 illustrates a signaling graph in accordance with at least some example embodiments;
FIGURE 3 illustrates an example apparatus capable of supporting at least some example embodiments;
FIGURE 4 illustrates a flow graph of a method in accordance with at least some example embodiments.

### EXAMPLE EMBODIMENTS

Power saving in cellular communication networks may be enhanced by the procedures described herein. More specifically, the operation related to relaxation of measurements may be enhanced. A User Equipment, UE, may determine whether to change its currently used measurement relaxation status to another measurement relaxation status before a measurement relaxation related event takes place, like a transmission of a report about said another measurement relaxation status to a wireless network node or expiry of a UE Assistance Information, UAI, prohibit timer. If the UE decides to change its measurement relaxation status before the measurement relaxation related event takes place, the UE can do that immediately, thereby making the process more efficient. The UE may then transmit the report about said another measurement relaxation status to the wireless network node after the change. When the UE is relaxing measurements, the measurements may be performed by the UE less frequently compared to the case where the UE is not relaxing the measurements. Performing measurements consumes power of the UE and therefore, measurement relaxation saves power of the UE. In case measurement relaxation is not stopped on time by the UE, radio link or handover failures may be caused because neighbour cells for handover candidates are not measured early enough.

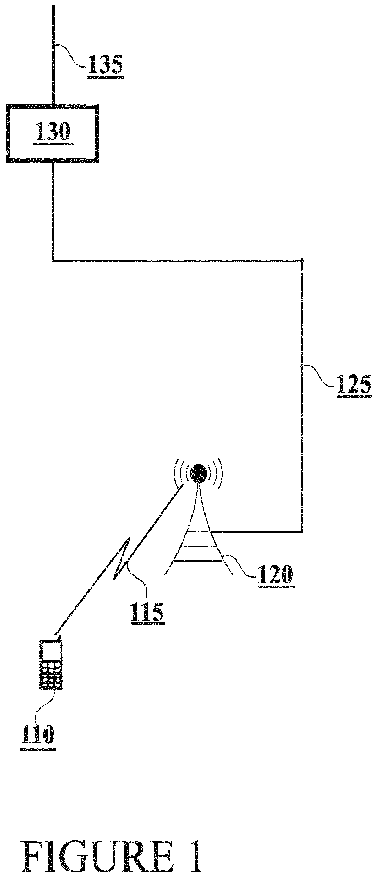

FIGURE 1 illustrates an example of a network scenario in accordance with at least some example embodiments. According to the example network scenario of FIGURE 1, there may be a cellular communication system, which comprises UE 110, wireless network node 120 and core network element 130. UE 110 may be connected to wireless network node 120 via air interface 115 and wireless network node 120 may be connected to core network 130 via wired interface 125. In some example embodiments, air interface 115 may a beam-based interface.

UE 110 may comprise, for example, a smartphone, a cellular phone, a Machine-to-Machine, M2M, node, Machine-Type Communications, MTC, node, RedCap UE (Reduced Capability UE) node, an Internet of Things, IoT, node, a car telemetry unit, a laptop computer, a tablet computer or, indeed, any kind of suitable wireless terminal, like a relay. Wireless network node 120 may be considered as a serving node for UE 110 and one cell of wireless network node 120 may be a serving cell for UE 110.

Air interface 115 between UE 110 and wireless network node 120 may be configured in accordance with a Radio Access Technology, RAT, which both UE 110 and wireless network node 120 are configured to support. Examples of cellular RATs include Long Term Evolution, LTE, New Radio, NR, which may also be known as fifth generation, 5G, radio access technology and MulteFire. For example in the context of LTE, wireless network node 120 may be referred to as eNB while wireless network node 120 may be referred to as gNB in the context of NR. In some example embodiments, wireless network node 120 may be referred to as a Transmission and Reception Point, TRP, or control multiple TRPs that may be co-located or non-co-located. In some example embodiments, wireless network node 120 may be a relay. In any case, example embodiments of the present disclosure are not restricted to any particular wireless technology. Instead, example embodiments may be exploited in any cellular communication network wherein relaxed measurements are used.

Wireless network node 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. Wireless network node 120 may be connected, directly or via at least one intermediate node, with core network 130 or with another core network.

In some example embodiments, the network scenario may comprise a relay node instead of, or in addition to, UE 110 and/or wireless network node 120. Relaying may be used for example when operating on millimeter-wave frequencies. One example of the relay node may be an Integrated Access and Backhaul, IAB, node. The IAB node may be referred to as a self-backhauling relay as well. Another example of a relay may be an out-band relay. In general, the relay node may comprise two parts:
1) Distributed Unit, DU, part which may facilitate functionalities of wireless network node 120, such as a gNB. Thus, in some example embodiments, the DU part of a relay may be referred to as wireless network node 120 and the DU may perform tasks of wireless network node 120;
2) Mobile Termination, MT, part which may facilitate functionalities of UE 110, i.e., a backhaul link which may be the communication link between a parent node (DU), such as a DU part of wireless network node 120, and the relay, such as an IAB node. In some example embodiments, the MT part may be referred to as UE 110 and perform tasks of UE 110.

In some example embodiments of the present disclosure, a prohibit timer may be configured for UAI to limit how frequently UE 110 transmits UAI. UE 110 may not be allowed to transmit UAI while the UAI prohibit timer is running. Power savings may be thus achieved by relaxing measurements of UE 110, such as Radio Resource Management, RRM, Radio Link Management, RLM, and/or Beam Failure Detection, BFD, measurements when UE 110 meets at least one criteria for relaxation of measurements. Criteria may be, e.g., signal power (such as Reference Signal Received Power, RSRP) or quality (such as Reference Signal Received Quality, RSRQ) measurement related. A measurement may be a cell or a beam level measurement.

Some example embodiments of the present disclosure may be applied in particular for handling of UAI for RRM/RLM/BFD relaxation. For instance, UAI may be used to report a measurement relaxation status of UE 110 to wireless network node 120. For instance, UAI may be used to report a change of a measurement relaxation status of UE 110 to wireless network node 120. In some example embodiments, a measurement relaxation status may indicate whether a condition for RRM/RLM/BFD measurement relaxation is met or not. The prohibit timer may be needed in case UAI is used to report the measurement relaxation status. For instance, the UAI prohibit timer may be used to prevent too frequent reports of the measurement relaxation status by UE 110 to wireless network node 120. In some example embodiments, any other message or procedure instead of UAI may be used to report a measurement relaxation status or a change of measurement relaxation status of UE 110 to wireless network node 120. For instance, a new Radio Resource Control, RRC, message or RRC procedure may be defined for this report. The following of the disclosure describes example embodiments with reference to UAI, however, it should be understood that the same embodiments may be applied for any other procedure or message.

A network node, such as wireless network node 120, may be able to configure the prohibit timer for UAI to limit how frequently UE 110 transmits UAI. If UE 110 is not allowed to transmit UAI while the prohibit timer is running and the prohibit timer would be used for UAI carrying the measurement relaxation status, like RRM/RLM/BFD relaxation status of UE 110, then UE 110 would not be able to report its relaxation status immediately when the measurement relaxation status of UE 110 changes. In some example embodiments, the prohibit timer may be generally configured for any UAI transmission by UE 110 or, alternatively, the prohibit timer may be specifically configured for measurement relaxation status reporting. For instance, the prohibit timer may be common or different between the RRM, RLM, and BFD based measurement relaxation status reporting.

Some example embodiments of the present disclosure therefore enable utilization of the prohibit timer for UAI for measurement relaxation status reporting and at the same time make it possible to allow, or prevent, e.g., by wireless network node 120,by UE 110 itself or by pre-defined rules, UE 110 to change its measurement relaxation status even when the UAI prohibit timer is running.

In some example embodiments, UE 110 may change its measurement relaxation status even when the UAI prohibit timer for measurement relaxation reporting, such as RRM/RLM/BFD relaxation reporting, is running. UE 110 may determine that a change of a measurement relaxation status of UE 110 to another measurement relaxation status is triggered and after that determine to change, and change, the measurement relaxation status to said another measurement relaxation status before a measurement relaxation related event takes place, e.g., while the UAI prohibit timer is running or before transmission of a report about said another measurement relaxation status. That is, the measurement relaxation related event may be a transmission of the report about said another measurement relaxation status to wireless network node 120 or expiry of the UAI prohibit timer of UE 110. UE 110 may then transmit the report about said another measurement relaxation status to the wireless network node. The report may be transmitted as UAI or as another procedure/message. The report may indicate a measurement relaxation condition. For example, the report may indicate that a measurement relaxation condition is met or not met anymore. For example, one of the measurement relaxations statuses may indicate that a measurement relaxation condition or conditions is/are met while another one of the measurement relaxation statuses may indicate that the measurement relaxation condition or conditions is/are not met. For example, different measurement relaxation conditions may be configured for RRM, RLM, and BFD measurements.

In some example embodiments, said changing may be allowed, and done, when a measurement relaxation condition, like a RRM/RLM/BFD measurement relaxation condition, is not met anymore. In such a case, the measurement relaxation status of UE 110 may be that measurements are relaxed and said another measurement relaxation status may be that measurements are not relaxed. That is, UE 110 may stop RRM/RLM/BFD measurement relaxation before RRM/RLM/BFD relaxation status is reported to the network, i.e., the report is transmitted to wireless network node 120. Said changing may be thus performed before the measurement relaxation related event takes place. UE 110 may be in a measurement relaxation mode before the change and in a non-measurement relaxation mode after the change, wherein UE 110 may be allowed to relax measurements in the measurement relaxation mode and not allowed to relax measurements in the non-measurement relaxation mode.

In some example embodiments, UE 110 may not be allowed to change its measurement relaxation status, such as RRM/RLM/BFD relaxation status, if the UAI prohibit timer for measurement relaxation status reporting is running when a measurement relaxation condition is met. That is, UE 110 may determine that a change of a measurement relaxation status of UE 110 to another measurement relaxation status is triggered and after that determine that it is not allowed to change the measurement relaxation status to said another measurement relaxation status before a measurement relaxation related event takes place, e.g., while the UAI prohibit timer is running or before transmission of a report about said another measurement relaxation status. In such a case, the measurement relaxation status of UE 110 may be that measurements are not relaxed and said another measurement relaxation status may be that measurements are relaxed. UE 110 may then transmit the report about said another measurement relaxation status to the wireless network node. Said determination to change may be thus performed before the measurement relaxation related event takes place but said changing may be performed after the event has taken place. Alternatively, said determination to change and changing the measurement relaxation state may be performed upon, or after, the measurement relaxation related event takes place. UE 110 may be in the non-measurement relaxation mode before the change and in the measurement relaxation mode after the change. In other words, UE 110 may need to wait until the UAI prohibit timer for the measurement relaxation status reporting expires before UE 110 may start measurement relaxation, such as RRM/RLM/BFD measurement relaxation. Alternatively, in some example embodiments, UE 110 may need to wait until the transmission of the report about said another measurement relaxation status by UE 110 to wireless network node 120 before UE 110 may start measurement relaxation, such as RRM/RLM/BFD measurement relaxation.

In some example embodiments the UAI prohibit timer for measurement relaxation reporting, such as RRM/RLM/BFD relaxation reporting, may be applied, started or restarted only when a measurement relaxation condition is not met, for example in case that a RRM/RLM/BFD relaxation condition is not met anymore. UE 110 may determine that a change of a measurement relaxation status of UE 110 to another measurement relaxation status is triggered and after that determine that it is not allowed to change the measurement relaxation status to said another measurement relaxation status before the measurement relaxation related event takes place, e.g., before transmission of the report, when the UAI prohibit timer was not started when a measurement relaxation condition was met and reported. That is, when UE 110 stops measurement relaxation and the measurement relaxation status is reported to the network.

In some example embodiments, the UAI prohibit timer for measurement relaxation reporting, such as RRM/RLM/BFD relaxation reporting, may be applied, started or restarted only when the measurement relaxation status report is transmitted after it is determined that a measurement relaxation condition is not met, for example in case that a RRM/RLM/BFD relaxation condition is not met anymore. UE 110 may determine that a change of a measurement relaxation status of UE 110 to another measurement relaxation status is triggered and determine that the measurement relaxation status triggered is when the measurement relaxation condition/conditions is/are not met. Hence, after the transmission of the report of the measurement relaxation status to wireless network node 120 by UE 110, the UAI prohibit timer may be started. In some example embodiments, the UAI prohibit timer for measurement relaxation reporting, such as RRM/RLM/BFD relaxation reporting, may not be applied, not started, nor restarted when the measurement relaxation status report is transmitted after it is determined that a measurement relaxation condition/conditions is/are met for example in case that a RRM/RLM/BFD relaxation condition is met. In some example embodiments, the measurement relaxation status report may hence be triggered and reported always when it is determined that a measurement relaxation condition/conditions is/are not met.

In some example embodiments, UE 110 may report if it has stopped relaxation already earlier i.e., before measurement relaxation status reporting, such as RRM/RLM/BFD relaxation status reporting. That is, UE 110 may report that its measurement relaxation status was changed to said another measurement relaxation status before transmitting the report about said another measurement relaxation status to wireless network node 120, wherein the measurement relaxation status may be that measurements are relaxed and said another measurement relaxation status may be that measurements are not relaxed. In some example embodiments, the report indicating that UE 110 has stopped measurement relaxation already earlier, i.e., before measurement relaxation status reporting, may be carried in the same message (e.g., UAI) as the measurement relaxation status reporting, or alternatively, in a different message. In some example embodiments, the different message may be a Minimization of Drive Test, MDT, report or logged report.

Additionally, or alternatively, UE 110 may report how long time ago before transmission of the report UE 110 has stopped relaxation. That is, UE 110 may report how long ago before transmitting the report about said another measurement relaxation status to wireless network node 120 the measurement relaxation status of the apparatus was changed, wherein the measurement relaxation status may be that measurements are relaxed and said another measurement relaxation status may be that measurements are not relaxed.

In some example embodiments, the network, for example wireless network node 120, may configure whether UE 110 is allowed to change its measurement relaxation status to another measurement relaxation status, e.g., to start/stop RLM/RRM/BFD measurement relaxation, before said another measurement relaxation status is reported to the network. UE 110 may hence receive from wireless network node 120 a configuration, the configuration indicating whether it is allowed to change its measurement relaxation status before transmitting the report about said another measurement relaxation status to wireless network node 120.

In some example embodiments, the network, for example wireless network node 120, may configure whether the UE is allowed to start/stop RLM/RRM/BFD measurement relaxation even if the UAI prohibit timer is running. UE 110 may hence receive from wireless network node 120 a configuration, the configuration indicating whether it is allowed to change its measurement relaxation status of the apparatus while the UAI prohibit timer is running.

In general, the measurement relaxation status and said another measurement relaxation status may comprise a Radio Resource Management, RRM, Radio Link Monitoring, RLM, or Beam Failure Detection, BFD, measurement relaxation status, or any combination thereof.

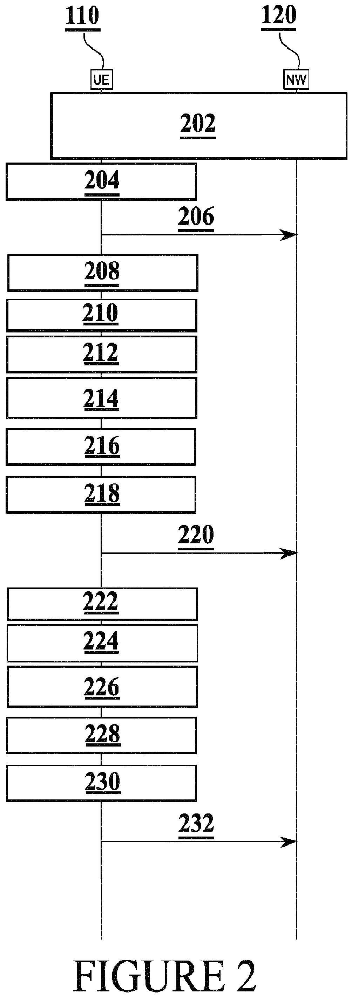

FIGURE 2 illustrates a first signaling graph in accordance with at least some example embodiments. On the vertical axes are disposed, from the left to the right, UE 110 and wireless network node 120. Time advances from the top towards the bottom. FIGURE 2 illustrates one example about how some example embodiments of the present disclosure may be applied.

At step 202, UE 110 may be configured by wireless network node 120 with a measurement relaxation configuration, such as a RRM/RLM/BFD measurement relaxation configuration. In some example embodiments, the network, for example wireless network node 120, may configure UE 110 with the UAI prohibit timer operation for measurement relaxation status reporting, such as for RRM/RLM/BFD measurement relaxation status reporting. The network may configure also a value of the UAI prohibit timer value for UE 110. For instance, the value of the UAI prohibit timer may be configured by the network such that the measurement relaxation status reporting does not load the uplink of the system unnecessarily.

At step 204, UE 110 may measure downlink signals and determine whether at least one measurement relaxation condition, such as a RRM, RLM and/or BFD measurement relaxation condition is met. Upon determining that the at least one measurement relaxation condition is met, UE 110 may, at step 206, transmit to wireless network node 120 a report, like a RRM/RLM/BFD measurement relaxation status report, the report indicating that the measurement relaxation condition is met.

At step 208, UE 110 may start relaxing measurements. For instance, UE 110 may start RRM/RLC/BFD relaxation, i.e., determine not to perform at least one of RRM, RLC and BFD measurements. At step 210, UE 110 may start the UAI prohibit timer for measurement relaxation status reporting, e.g., for RRM/RLM/BFD measurement relaxation status reporting. Alternatively, in some example embodiments, the UAI prohibit timer may not be started when the measurement relaxation condition, e.g., the RRM/RLM/BFD measurement relaxation condition, is met and reported to the network. This way, UE 110 may transmit a report when the measurement relaxation condition is not met always to the network. That is, UE 110 may determine to change its measurement relaxation status before the measurement relaxation related event takes place when the UAI prohibit timer was not started when the measurement relaxation condition was met and reported. Hence, after the transmission of the report of the measurement relaxation status to wireless network node 120 by UE 110, the UAI prohibit timer may be started.

At step 212, UE 110 may determine that the measurement relaxation condition is not met anymore. For instance, UE 110 may determine that the RRM/RLM/BFD measurement relaxation condition is not met anymore. That is, UE 110 may determine that a change of the measurement relaxation status of UE 110 to another measurement relaxation status is triggered. At step 214, UE 110 may determine that the UAI prohibit timer is running and that measurement relaxation status reporting is triggered.

At step 216, UE 110 may determine whether to change the measurement relaxation status to said another measurement relaxation status before the measurement relaxation related event takes place. UE 110 may determine to change the measurement relaxation status from the relaxed measurements to non-relaxed measurements. For instance, UE 110 may determine to change its measurement relaxation status while the UAI prohibit timer is running. In some example embodiments, UE 110 may trigger measurement relaxation status reporting, such as RRM/RLM/BFD measurement relaxation status reporting, but the UAI prohibit timer may prevent sending the report.

UE 110 may stop measurement relaxation, such as RRM/RLM/BFD measurement relaxation, while it cannot still perform the measurement relaxation status reporting. That is, UE 110 may change its measurement relaxation status to said another measurement relaxation status before the measurement relaxation event takes place, wherein the measurement relaxation status is that measurements are relaxed and said another measurement relaxation status is that measurements are not relaxed. UE 110 may be in a measurement relaxation mode before the change and in a non-measurement relaxation mode after the change, wherein UE 110 may be allowed to relax measurements in the measurement relaxation mode and not allowed to relax measurements in the non-measurement relaxation mode. In some example embodiments, the network, such as wireless network node 120, may configure what UE shall do in this case.

At least one measurement relaxation related event may take place next. At step 218, the UAI prohibit timer may expire. At step 220, UE 110 may transmit the report about said another measurement relaxation status to wireless network node 120. That is, UE 110 may perform measurement relaxation status reporting, such as RRM/RLM/BFD measurement relaxation status reporting, after changing its measurement relaxation status to said another measurement relaxation. UE 110 may report that a measurement relaxation condition is not met anymore. The report may be transmitted as UAI or as another procedure/message.

In some example embodiments, UE 110 may report if the relaxation was stopped before the measurement relaxation related event took place. For instance, UE 110 may report if the relaxation was stopped before the expiry of the UAI prohibit timer and how long before the relaxation was stopped. That is, UE 110 may report that the measurement relaxation status of the apparatus was changed to said another measurement relaxation status before transmitting the report about said another measurement relaxation status to the wireless network node. Alternatively, or in addition, UE 110 may report how long ago before transmitting the report about said another measurement relaxation status to wireless network node 120 the measurement relaxation status was changed. The report indicating that UE 110 has stopped measurement relaxation already earlier, i.e., before measurement relaxation status reporting, may be carried in the same message (e.g., UAI) as the measurement relaxation status reporting, or alternatively, in a different message.

At step 222, UE 110 may start the UAI prohibit timer for measurement relaxation status reporting, such as RRM/RLM/BFD measurement relaxation status reporting. At step 224, UE 110 may measure downlink signals and determine that a measurement relaxation condition, such as RRM/RLM/BFD measurement relaxation condition is met. That is, UE 110 may determine that a change of a measurement relaxation status of UE 110 to another measurement relaxation status is triggered, wherein the measurement relaxation status is that measurements are not relaxed and said another measurement relaxation status is that measurements are relaxed. Hence, UE 110 may be in the non-measurement relaxation mode before the change and in the measurement relaxation mode after the change. Step 226 may correspond to step 214.

At step 228, UE 110 may determine whether to change the measurement relaxation status to said another measurement relaxation status before the measurement relaxation related event takes place. UE 110 may determine whether to change the measurement relaxation status while the UAI prohibit timer is running. In this case, UE 110 may determine that it is not allowed to start measurement relaxation, such RRM/RLM/BFD measurement relaxation until the UAI prohibit timer expires. For instance, UE 110 may trigger the measurement relaxation status reporting , such as RRM/RLM/BFD measurement relaxation status reporting, but the prohibit timer prevents reporting. In some example embodiments, UE 110 may attempt to change the relaxation measurement status, such as RRM/RLM/BFD relaxation status, while the UAI prohibit timer runs. In some example embodiments, UE 110 shall not start measurement relaxation, such as RRM/RLM/BFD measurement relaxation, as it cannot report the change to the network while the prohibit timer is running. That is, said changing the measurement relaxation state may be performed upon, or after, the measurement relaxation related event takes place. In some example embodiments, UE 110 may need to wait until the transmission of the report about said another measurement relaxation status by UE 110 to wireless network node 120 before UE 110 may start measurement relaxation. Step 230 may be the same as step 218.

At step 232, UE 110 may transmit the report about said another measurement relaxation status to wireless network node 120. That is, UE 110 may perform measurement relaxation status reporting, such as RRM/RLM/BFD measurement relaxation status reporting. In addition, in some example embodiments, UE 110 may change the measurement relaxation status to said another measurement relaxation status at this step. For instance, UE 110 may start RRM/RLM/BFD measurement relaxation at step 232. UE 110 may also report if the measurement relaxation condition was met before expiry of the UAI prohibit timer.

The UAI prohibit timer may be operated in/by UE 110 based on the triggers as defined above. The UAI prohibit timer may be configured for UE 110 by the network and UE 110 may operate according to the configuration. In some example embodiments, the measurement relaxation may be configured independently and/or in combination for all the features RRM, RLM, and BFD. Hence, the UAI prohibit timer may operate as proposed based on the measurement relaxation criteria of one of those features (RRM, RLM, BFD) or in combination of those features.

Embodiments of the present disclosure therefore make it possible for the network to configure the UAI prohibit timer of UE 110 for measurement relaxation status reporting , such as for RRM/RLM/BFD measurement relaxation status reporting. Moreover, it may be ensured that the measurement relaxation status is not transmitted too frequently by UE 110, to enable power savings.

In some example embodiments, UE 110 may be allowed to change its measurement relaxation status, such as RRM/RLM/BFD relaxation status, before the status is reported to the network. The benefit is that CONNECTED mode mobility performance, i.e., radio link and handover failures can be avoided (or situation is improved), because UE would be able to stop measurement relaxation immediately after the measurement relaxation condition, such as RRM/RLM/BFD relaxation condition, is not met anymore. In addition, there would be no need to define 2 separate prohibit timers for measurement relaxation status reporting.

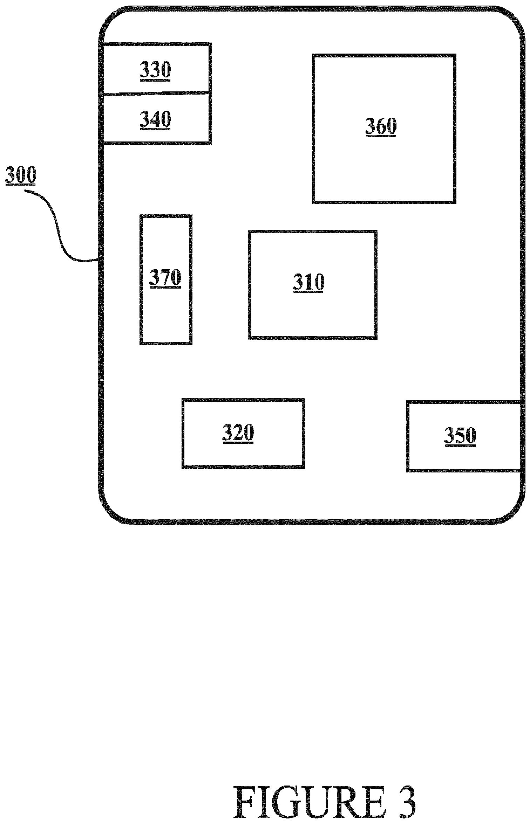

FIGURE 3 illustrates an example apparatus capable of supporting at least some example embodiments. Illustrated is device 300, which may comprise, for example, UE 110 or wireless network node 120, or a control device configured to control the functioning thereof, possibly when installed therein. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Global System for Mobile communication, GSM, Wideband Code Division Multiple Access, WCDMA, Long Term Evolution, LTE, and/or 5G/NR standards, for example.

Device 300 may comprise a Near-Field Communication, NFC, transceiver 350. NFC transceiver 350 may support at least one NFC technology, such as Bluetooth, Wibree or similar technologies.

Device 300 may comprise User Interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a Subscriber Identity Module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some example embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the example embodiment various ways of interconnecting at least two of the aforementioned devices may be selected without departing from the scope of the example embodiments.

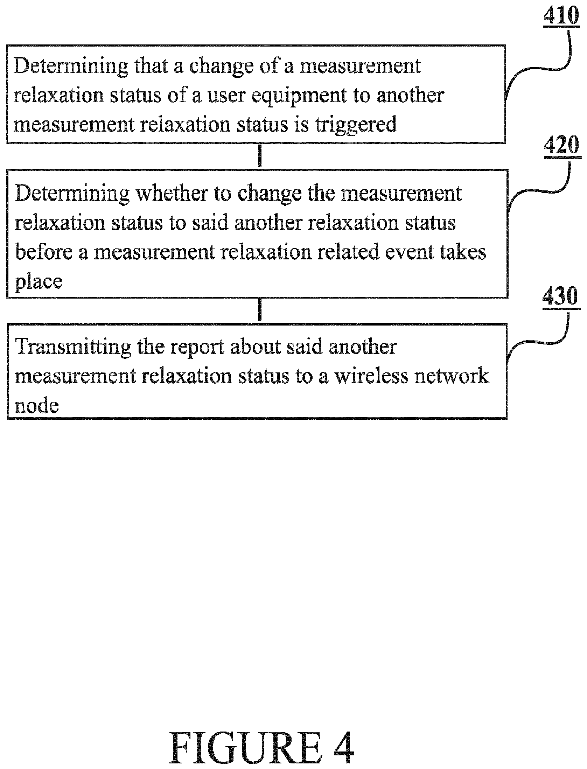

FIGURE 4 is a flow graph of a first method in accordance with at least some example embodiments. The phases of the illustrated first method may be performed by apparatus 300, like UE 110 or by a control device configured to control the functioning thereof, possibly when installed therein.

The method may comprise, at step 410, determining that a change of a measurement relaxation status of a user equipment to another measurement relaxation status is triggered. The method may also comprise, at step 420, determining whether to change the measurement relaxation status to said another measurement relaxation status before a measurement relaxation related event takes place. Finally, the method may comprise, at step 430, transmitting the report about said another measurement relaxation status to a wireless network node.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, UE 110 or wireless network node 120, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, UE 110 or wireless network node 120, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

While the forgoing examples are illustrative of the principles of the example embodiments in one or more particular applications, it will be apparent to those of ordinary skill in the art that numerous modifications in form, usage and details of implementation can be made without the exercise of inventive faculty, and without departing from the principles and concepts of the disclosure. Accordingly, it is not intended that the disclosure be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in cellular communication networks, for example in 3GPP networks, wherein relaxed measurements are used.

### ACRONYMS LIST

- 3GPP: 3rd Generation Partnership Project
- BFD: Beam Failure Detection
- BS: Base Station
- DU: Distributed Unit
- GSM: Global System for Mobile communication
- IAB: Integrated Access and Backhaul
- IoT: Internet of Things
- LTE: Long-Term Evolution
- M2M: Machine-to-Machine
- MDT: Minimization of Drive Test
- MT: Mobile Termination
- NR: New Radio
- RAN: Radio Access Network
- RAT: Radio Access Technology
- RLC: Radio Link Control
- RRC: Radio Resource Control
- RRM: Radio Resource Management
- RSRP: Reference Signal Received Power
- RSRQ: Reference Signal Received Quality
- TRP: Transmission and Reception Point
- UAI: UE Assistance Information
- UE: User Equipment
- UI: User Interface
- WCDMA: Wideband Code Division Multiple Access
- WiMAX: Worldwide Interoperability for Microwave Access
- WLAN: Wireless Local Area Network

### REFERENCE SIGNS LIST

| | |
|---|---|
| 110 | UE |
| 115 | Air interface |
| 120 | Wireless network node |
| 125, 135 | Wired interfaces |
| 130 | Core Network |
| 300 - 370 | Structure of the apparatus of FIGURE 3 |
| 410 - 430 | Phases of the method in FIGURE 4 |

## Claims

1. A user equipment, UE, comprising:
- means for determining that a change of a measurement relaxation status of the UE to another measurement relaxation status is triggered;
- means for determining whether to change the measurement relaxation status to said another measurement relaxation status before a measurement relaxation related event takes place;
- means for transmitting a report about said another measurement relaxation status to a wireless network node, and
- means for receiving a configuration, the configuration indicating whether the UE is allowed to change the measurement relaxation status of the UE
∘ before transmitting the report about said another measurement relaxation status of the UE to the wireless network node, or
∘ while a UE assistance information prohibit timer is running.

2. The UE according to claim 1, wherein the measurement relaxation related event is a transmission of the report about said another measurement relaxation status to the wireless network node or expiry of the UE assistance information prohibit timer.

3. The UE according to claim 1 or claim 2, wherein the UE is in a measurement relaxation mode before the change and in a non-measurement relaxation mode after the change, or the UE is in the non-measurement relaxation mode before the change and in the measurement relaxation mode after the change, and the UE is allowed to relax measurements in the measurement relaxation mode and the UE is not allowed to relax measurements in the non-measurement relaxation mode.

4. The UE according to any of the preceding claims, further comprising:
- means for determining whether the UE is allowed to change the measurement relaxation status of the UE based on a status of the UE assistance information prohibit timer and said another measurement relaxation status.

5. The UE according to any of the preceding claims, further comprising:
- means for determining whether to change the measurement relaxation status of the UE while the UE assistance information prohibit timer is running.

6. The UE according to any of the preceding claims, further comprising:
- means for determining to change the measurement relaxation status of the UE while the UE assistance information prohibit timer is running; and
- means for changing the measurement relaxation status to said another measurement relaxation status before the measurement relaxation related event takes place.

7. The UE according to any of the preceding claims, further comprising:
- means for determining to change the measurement relaxation status of the UE before the measurement relaxation related event takes place when a measurement relaxation condition is not met while the UE assistance information prohibit timer is running; and
- means for changing the measurement relaxation status to said another measurement relaxation status before the measurement relaxation related event takes place.

8. The UE according to any of the preceding claims, further comprising:
- means for determining to change the measurement relaxation status of the UE after the measurement relaxation related event has taken place when a measurement relaxation condition is met while the UE assistance information prohibit timer is running; and
- means for changing the measurement relaxation status to said another measurement relaxation status after the measurement relaxation related event has taken place.

9. The UE according to any of the preceding claims, further comprising:
- means for determining to change the measurement relaxation status of the UE before the measurement relaxation related event takes place when the UE assistance information prohibit timer was not started when a measurement relaxation condition was met and reported.

10. The UE according to any of the preceding claims, further comprising:
- means for reporting that the measurement relaxation status of the UE was changed to said another measurement relaxation status before transmitting the report about said another measurement relaxation status to the wireless network node.

11. The UE according to any of the preceding claims, further comprising:
- means for reporting how long ago before transmitting the report about said another measurement relaxation status of the UE to the wireless network node the measurement relaxation status of the UE was changed.

12. The UE according to any of the preceding claims, wherein the measurement relaxation status and said another measurement relaxation status comprise at least one of Radio Resource Management, RRM, Radio Link Monitoring, RLM, and Beam Failure Detection, BFD, measurement relaxation statuses.

13. A wireless network node, comprising:
- means for receiving from a user equipment, UE, a report indicating a change of a measurement relaxation status of the UE to another measurement relaxation status as a report about said another measurement relaxation status, and
- means for transmitting a configuration, the configuration indicating whether the UE is allowed to change the measurement relaxation status of the UE
∘ before transmission of the report about said another measurement relaxation status, or
∘ while a UE assistance information prohibit timer is running.

14. The wireless network node according to claim 13, further comprising:
- means for receiving from the UE reporting that the measurement relaxation status of the UE was changed to said another measurement relaxation status before transmission of the report about said another measurement relaxation status.

15. The wireless network node according to claim 13 or 14, further comprising:
- means for receiving from the UE reporting how long ago before transmission of the report about said another measurement relaxation status of the UE the measurement relaxation status of the user equipment was changed.
